# EUROPEAN PATENT APPLICATION

(11) **EP 4 753 285 A1**
(43) Date of publication of application: **03.06.2026**
(21) Application number: 24929315.0
(22) Date of filing: 12.12.2024
(51) Int. Cl.: H04R 1/10

(54) **CHARGING CASE AND EARPHONE ASSEMBLY**

(30) Priority: 13.03.2024 CN 202420493836 U; 26.03.2024 CN 202420608443 U
(71) Applicant: HUAWEI TECHNOLOGIES CO., LTD., Shenzhen 518129 (CN)
(72) Inventor: ZHANG, Guangxing, Shenzhen, Guangdong 518129 (CN); WANG, Wenfeng, Shenzhen, Guangdong 518129 (CN); LI, Liang, Shenzhen, Guangdong 518129 (CN); DANG, Wei, Shenzhen, Guangdong 518129 (CN); WU, Jianhui, Shenzhen, Guangdong 518129 (CN)
(74) Representative: Isarpatent
(86) International application number: PCT/CN2024/138976
(87) International publication number: WO 2025/189872

(57) **Abstract**

This application relates to a charging case and an earphone assembly, and the charging case may be configured to store and charge an earphone. The charging case includes an upper housing, a lower housing, an opening and closing mechanism, and a circuit board. The circuit board is located in the lower housing. The opening and closing mechanism connects the upper housing to the lower housing, and enables the upper housing to be opened or closed relative to the lower housing. A metal portion of the upper housing is electrically connected to the opening and closing mechanism, and the opening and closing mechanism is electrically connected to the circuit board, to ground the metal portion. In embodiments of this application, the metal portion of the upper housing is electrically connected to the circuit board in the lower housing through the opening and closing mechanism, to ground the metal portion. A grounding manner is simple, and grounding effect is good.

## Description

This application claims priorities to Chinese Patent Application No. 202420493836.9, filed with the China National Intellectual Property Administration on March 13, 2024 and entitled "CHARGING CASE AND EARPHONE ASSEMBLY"; and to Chinese Patent Application No. 202420608443.8, filed with the China National Intellectual Property Administration on March 26, 2024 and entitled "CHARGING CASE AND EARPHONE ASSEMBLY", both of which are incorporated herein by reference in their entireties.

### TECHNICAL FIELD

This application relates to the field of earphone apparatus technologies, and in particular, to a charging case and an earphone assembly.

### BACKGROUND

Wireless earphones are increasingly popular among users due to their portability and fashionability. Currently, the wireless earphones gradually become a trend. A charging case for storing and charging the wireless earphone is essential. The charging case usually includes a housing and a circuit component such as a circuit board. When the housing is made of a metal material, electrostatic discharge from the metal may cause a function failure of software or hardware of the charging case, affecting user experience.

### SUMMARY

Embodiments of this application provide a charging case and an earphone assembly. In this application, a proper grounding path is designed to ground a metal portion of a housing of the charging case, to effectively enhance reliability of the charging case.

According to a first aspect, an embodiment of this application provides a charging case. The charging case may be configured to store and charge an earphone, and the earphone may be a wireless earphone. The charging case includes an upper housing, a lower housing, an opening and closing mechanism, and a circuit board. The opening and closing mechanism connects the upper housing to the lower housing, and enables the upper housing to be opened or closed relative to the lower housing, the upper housing and the lower housing jointly enclose an accommodation cavity, and the accommodation cavity is configured to accommodate an earphone. The upper housing includes a metal portion. It may be understood that, the entire upper housing may be made of a metal material to form the metal portion, or a part of a structure of the upper housing is made of a metal material to form the metal portion. The upper housing may be of a single-layer structure, or the upper housing may be of a multi-layer structure. The lower housing may be of a single-layer structure, or the lower housing may be of a multi-layer structure. Multi-layer may be understood as two or more layers. The circuit board is located in the lower housing, and the circuit board may be fastened to the lower housing or may be fastened to a mechanical part in the lower housing. The metal portion is electrically connected to the opening and closing mechanism, and the opening and closing mechanism is electrically connected to the circuit board, to ground the metal portion.

Electrostatic discharge from the metal portion of the upper housing may cause a function failure of software or hardware of the charging case, affecting user experience. For example, the electrostatic discharge from the metal may cause a function failure of software of the charging case, requiring shutdown and restart and affecting user experience, or the electrostatic discharge from the metal may cause a function failure of hardware (for example, the circuit board) in the charging case, damaging the charging case. Therefore, the metal portion of the upper housing needs to be grounded, to enhance performance reliability of the charging case.

In this embodiment of this application, the opening and closing mechanism of the charging case is fully and properly used. The metal portion is electrically connected to the opening and closing mechanism, and the opening and closing mechanism is electrically connected to the circuit board in the lower housing, to electrically connect the metal portion to the circuit board in the lower housing, so as to ground the metal portion and avoid impact of the electrostatic discharge from the metal portion on performance of the charging case. A distance between the metal portion of the upper housing and the circuit board in the lower housing is long. In this embodiment of this application, the opening and closing mechanism of the charging case and internal space of the charging case are used, to ground the metal portion. A grounding manner is simple, and grounding effect is good.

In a possible implementation, the opening and closing mechanism includes a support and a rotating shaft. The support is fastened to the upper housing and rotatably connected to the lower housing through the rotating shaft, and the support is electrically connected to the metal portion and electrically connected to the circuit board. An end of the support is rotatably connected to the rotating shaft, and another end of the support is fastened to the upper housing. A grounding path of the metal portion may be as follows: The metal portion may be electrically connected to the support, the support is electrically connected to the rotating shaft, and the rotating shaft is electrically connected to the circuit board, to ground the metal portion. Alternatively, the metal portion may be electrically connected to the support, the support is electrically connected to the rotating shaft, the rotating shaft is electrically connected to the lower housing, and the lower housing is electrically connected to the circuit board, to ground the metal portion. Alternatively, the metal portion is electrically connected to the support, and the support is electrically connected to the circuit board, to ground the metal portion. Alternatively, the metal portion is electrically connected to the support, the support is electrically connected to the lower housing, and the lower housing is electrically connected to the circuit board. In this embodiment of this application, the grounding path of the metal portion is flexible, and may be designed based on space in the charging case.

In a possible implementation, the rotating shaft is fastened to the lower housing, the support is rotatably connected to the rotating shaft, and the support is electrically connected to the circuit board through the rotating shaft. The rotating shaft may be fastened to the lower housing through an adhesive, a fastener, or another fastening structure, or the rotating shaft may be welded to the lower housing. In this embodiment of this application, the metal portion is electrically connected to the circuit board through the support and the rotating shaft, to ground the metal portion.

In a possible implementation, the support is fastened to the lower housing and rotatably connected to the upper housing through the rotating shaft. For example, the rotating shaft is fastened to the upper housing, and the support is rotatably connected to the rotating shaft.

In a possible implementation, the support includes a through hole, the rotating shaft passes through the through hole, and a spacing between a hole wall of the through hole and the rotating shaft is less than or equal to 0.05 mm. When the spacing between the hole wall of the through hole and the rotating shaft is excessively large, it is difficult to electrically connect the support to the rotating shaft. The spacing between the hole wall of the through hole and the rotating shaft is set to be less than or equal to 0.05 mm. This can implement good electrical connection between the support and the rotating shaft.

In a possible implementation, the charging case includes a conductive member, and the conductive member electrically connects the support to the metal portion. The support may be electrically connected to the metal portion through the conductive member, and a connection manner is simple. The conductive member is sandwiched between the support and the metal portion, and is highly stable and not likely to detach. The conductive member may be a structure having connection strength, for example, a conductive adhesive. When electrically connecting the metal portion to the support, the conductive member can further fasten the metal portion to the support, to enhance structural stability of the charging case. The conductive member may alternatively be conductive fabric, conductive silver paste, conductive foam, or the like.

In a possible implementation, there are at least two conductive members, and the at least two conductive members are spaced from each other. When there are at least two conductive members, reliability of electrical connection can be enhanced. Positions of the at least two conductive members may be set according to a requirement. This is not limited in embodiments of this application.

In a possible implementation, the charging case includes an adhesive member, the adhesive member fastens the support to the upper housing, and connection strength of the adhesive member is higher than connection strength of the conductive member. The adhesive member has high connection strength, so that disposing the adhesive member can enhance strength of connection between the support and the upper housing, to enhance structural stability of the charging case. The adhesive member may be a two-component adhesive, and the two-component adhesive has very high bonding strength.

In a possible implementation, there are at least two adhesive members, the at least two adhesive members are spaced from each other on an edge of the support, and the conductive member is located between two adjacent adhesive members. Connection strength of the adhesive member is high, and the adhesive member is located on the edge of the support, so that overall structural strength of the support and the upper housing can be enhanced. A large quantity of adhesive members can increase an area of connection between the support and the upper housing, to help enhance stability of connection between the support and the upper housing.

In a possible implementation, the charging case includes an electrical connector, and the electrical connector electrically connects the support to the circuit board. In this embodiment of this application, the grounding path of the metal portion may be as follows: The metal portion, the support, the electrical connector, and the circuit board are electrically connected in sequence. The support may be made of a conductive metal material, and a charge released to the support may be conducted to the circuit board through the electrical connector instead of passing through the rotating shaft. This reduces conductive structures required in a process of grounding the metal portion, and enhances grounding reliability.

In a possible implementation, the opening and closing mechanism includes a rotating shaft; and the rotating shaft is fastened to the lower housing, the upper housing is provided with a connection hole, the rotating shaft passes through the connection hole, and the metal portion is electrically connected to the rotating shaft; or the rotating shaft is fastened to the upper housing, the lower housing is provided with a connection hole, the rotating shaft passes through the connection hole, and the metal portion is electrically connected to the rotating shaft. The opening and closing mechanism may not be provided with a support, to facilitate miniaturization and lightweight of the charging case. The rotating shaft connects the upper housing to the lower housing, so that the upper housing can be opened or closed relative to the lower housing through the rotating shaft. When the opening and closing mechanism includes the rotating shaft, and the opening and closing mechanism is not provided with the support, the grounding path of the metal portion may be as follows: The metal portion, the rotating shaft, and the circuit board are electrically connected in sequence, or the metal portion, the rotating shaft, the lower housing, and the circuit board are electrically connected in sequence. In this embodiment of this application, the grounding path is flexible, and may be designed based on the space and a structure in the charging case.

In a possible implementation, a spacing between a hole wall of the connection hole and the rotating shaft is less than or equal to 0.05 mm. This facilitates electrical connection between the metal portion of the upper housing and the rotating shaft.

In a possible implementation, the charging case includes an electrical connector, and the electrical connector electrically connects the rotating shaft to the circuit board, or the electrical connector electrically connects the lower housing to the circuit board. In this embodiment of this application, the grounding path of the metal portion may be as follows: The metal portion, the support, the rotating shaft, the electrical connector, and the circuit board are electrically connected in sequence, or the metal portion, the support, the rotating shaft, the lower housing, the electrical connector, and the circuit board are electrically connected in sequence. In this embodiment of this application, the grounding path is flexible, and may be designed based on the space and the structure in the charging case.

In a possible implementation, the electrical connector is a flexible circuit board, a spring plate, or a pogo pin. The flexible circuit board has good flexibility and electrical conductivity, and may be bent based on internal space and a structure of the charging case to avoid occupying excessive space of the charging case, to enhance utilization of the internal space of the charging case. The spring plate or the pogo pin can also implement good and stable electrical connection.

It may be understood that, in this embodiment of this application, the existing opening and closing mechanism of the charging case is used to implement electrical connection between the metal portion and the circuit board, the conductive member for electrical connection is disposed in a gap of the upper housing, and the electrical connector is flexibly disposed in unoccupied space of the lower housing based on flexibility of the electrical connector, with no need to additionally increase a size of the charging case. This helps the charging case have good performance, and facilitates miniaturization of the charging case.

In a possible implementation, the lower housing is electrically connected to the circuit board. The charging case includes a conductive contact member, and the conductive contact member is fastened to a part that is of the support and that is located in the lower housing; when the upper housing is closed relative to the lower housing, the conductive contact member comes into contact with the lower housing and electrically connects the support to the lower housing; and when the upper housing is opened relative to the lower housing, the conductive contact member is separated from the lower housing. The conductive contact member may be conductive foam or the like. The conductive contact member is fastened to the support, so that when the upper housing is closed relative to the lower housing, the conductive contact member electrically connects the support to the lower housing. This can increase an electrical connection path between the metal portion and the circuit board when the upper housing is closed relative to the lower housing, and enhance reliability of grounding between the metal portion and the circuit board.

According to a second aspect, this application provides an earphone assembly, including an earphone and the charging case according to any one of the foregoing implementations. The earphone is located in the accommodation cavity of the charging case, and the charging case is configured to store and charge the earphone.

In embodiments of this application, the opening and closing mechanism is used to electrically connect the metal portion to the circuit board in the lower housing, to ground the metal portion, so as to avoid a function failure of software or hardware of the charging case caused by electrostatic discharge from the metal portion. This enhances reliability and performance stability of the charging case, and enhances user experience.

### BRIEF DESCRIPTION OF DRAWINGS

To describe the technical solutions in embodiments of this application or in the background more clearly, the following describes the accompanying drawings used in embodiments of this application or the background.
FIG. 1 is a diagram of a structure of an earphone assembly according to an implementation of this application;
FIG. 2 is a diagram of a partial cross-sectional structure of a charging case shown in FIG. 1 and cut along A-A;
FIG. 3 is a diagram of an exploded structure of a charging case shown in FIG. 1;
FIG. 4 is an enlarged view of a structure at X of the charging case shown in FIG. 3;
FIG. 5 is a diagram of another exploded structure of a charging case shown in FIG. 1;
FIG. 6 is a diagram of a structure of the charging case shown in FIG. 5 from another angle;
FIG. 7 is a diagram of an exploded structure of an upper housing according to an implementation of this application;
FIG. 8 is a diagram of another exploded structure of an upper housing according to an implementation of this application;
FIG. 9 is a diagram of an exploded structure of an opening and closing mechanism according to an implementation of this application;
FIG. 10 is a diagram of structures of an opening and closing mechanism and a connector according to an implementation of this application;
FIG. 11 is a diagram of a partial structure of an opening and closing mechanism according to an implementation of this application;
FIG. 12 is a diagram of a partial structure of the charging case shown in FIG. 2;
FIG. 13 is an enlarged view of a structure at H of the charging case shown in FIG. 12; and
FIG. 14 is a diagram of a structure of another charging case according to an implementation of this application.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

It should be understood that, "first", "second", and the like used in this application are merely used for distinguishing and description, but cannot be understood as an indication or implication of relative importance or an indication or implication of a sequence.

In the descriptions of this application, an orientation or a position relationship indicated by the term "upper", "lower", "left", "right", or the like is an orientation or a position relationship based on the accompanying drawings, and is merely intended for ease of describing this application and simplifying description, but does not indicate or imply that a specified apparatus or element needs to have a specific orientation or needs to be constructed and operated in a specific orientation. Therefore, such terms cannot be understood as a limitation on this application.

In the descriptions of this application, it should be noted that, unless otherwise clearly specified and limited, the term "connection" should be understood in a broad sense, for example, may be fixed connection, or may be detachable connection, or may be abutting connection or integrated connection. A person of ordinary skill in the art may understand specific meanings of the foregoing terms in this application based on specific cases.

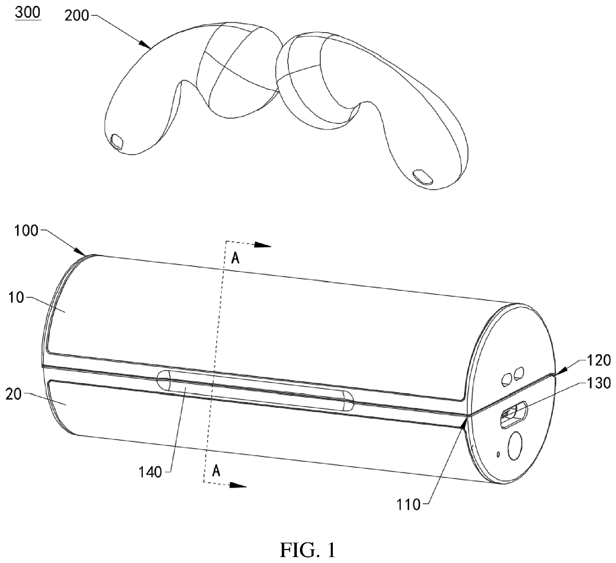

FIG. 1 is a diagram of a structure of an earphone assembly 300. The earphone assembly 300 may include a charging case 100 and an earphone 200. It can be learned that statuses of the charging case 100 and the earphone 200 in FIG. 1 are as follows: The earphone 200 is not placed in the charging case 100, and the charging case 100 is in a closed state. It may be understood that, the charging case 100 and the earphone 200 may alternatively be in other statuses. For example, the earphone 200 is located in the charging case 100, and the charging case 100 is in a closed state.

The charging case 100 may include an upper housing 10 and a lower housing 20. The upper housing 10 may be of a single-layer structure, or the upper housing 10 may be of a multi-layer structure. The lower housing 20 may be of a single-layer structure, or the lower housing 20 may be of a multi-layer structure. Multi-layer may be understood as two or more layers.

The lower housing charging case 100 may be a clamshell case, and the charging case 100 may be provided with an opening and closing side 110 and a connection side 120. When the charging case 100 is in a closed state or an opened state, the upper housing 10 and the lower housing 20 may keep being in a connected state on the connection side 120, to prevent the upper housing 10 and the lower housing 20 from being completely separated from each other when the charging case 100 is opened, so as to avoid a fall or loss of the upper housing 10 during use by a user.

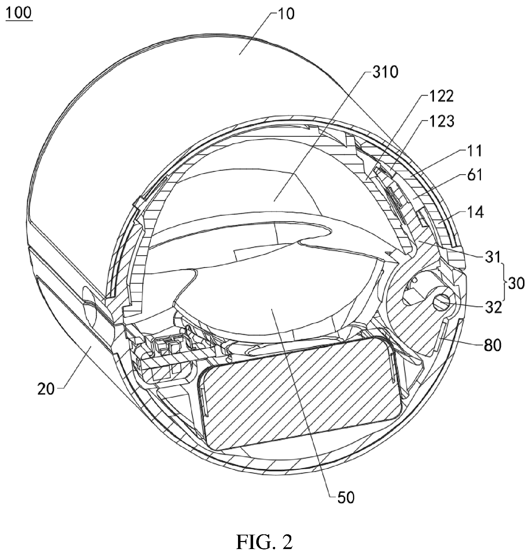

The charging case 100 may be configured to store the earphone 200. The earphone 200 may be a wireless earphone, and the wireless earphone is portable. The upper housing 10 may be opened relative to the lower housing 20, in other words, the upper housing 10 and the lower housing 20 may be separated from each other on the opening and closing side 110 to open the charging case 100, and the earphone 200 may be placed in the lower housing 20, or the earphone 200 may be taken out of the lower housing 20. The upper housing 10 may be closed relative to the lower housing 20, in other words, after the earphone 200 is placed in the lower housing 20 or the earphone 200 is taken out of the lower housing 20, the upper housing 10 and the lower housing 20 may approach each other on the opening and closing side 110 to close the charging case 100. The upper housing 10 and the lower housing 20 jointly enclose an accommodation cavity 310 (as shown in FIG. 2). The earphone 200 is located in the accommodation cavity 310, and the accommodation cavity 310 is configured to accommodate the earphone 200.

Refer to FIG. 1. The charging case 100 may be configured to charge the earphone 200. Functional components of the charging case 100, such as a battery and a circuit board (not shown in FIG. 1), may be disposed in a cavity of the lower housing 20. The charging case 100 may include a charging interface 130, and the charging interface 130 may be provided on the lower housing 20. The charging interface 130 is electrically connected to the battery in the lower housing 20. After being connected to an external power supply, the charging interface 130 may be configured to charge the battery in the lower housing 20. When the earphone 200 is placed in the charging case 100, the battery of the charging case 100 may charge the earphone 200. When the charging case 100 is being charged, the earphone 200 may also be placed in the charging case 100. In this way, both the charging case 100 and the earphone 200 can be charged.

In some embodiments, the charging case 100 may be provided with a concave portion 140, one part of the concave portion 140 is provided on the upper housing 10, and the other part of the concave portion 140 is provided on the lower housing 20. When the user opens the charging case 100, a finger of the user may act on the concave portion 140, so that the user applies force to open the upper housing 10, and places the earphone 200 in the charging case 100 or takes the earphone 200 out of the charging case 100.

The charging case 100 and the earphone 200 in FIG. 1 are merely examples. Sizes, shapes, structures, and the like of the charging case 100 and the earphone 200 may be set according to a requirement. Specific structures of the charging case 100 and the earphone 200 are not limited in this application.

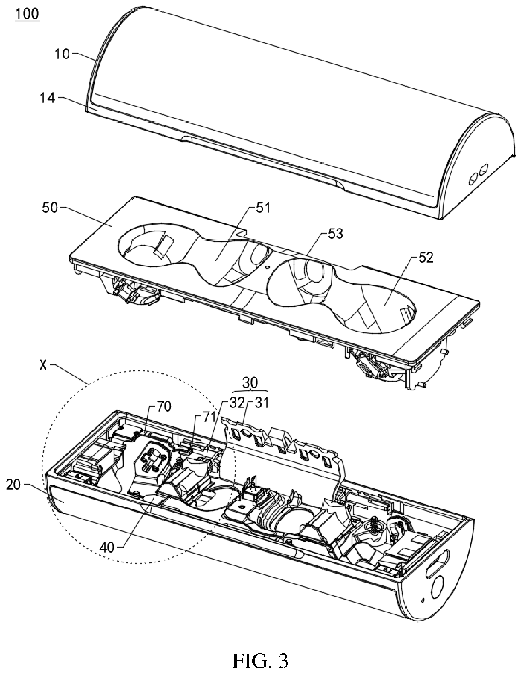

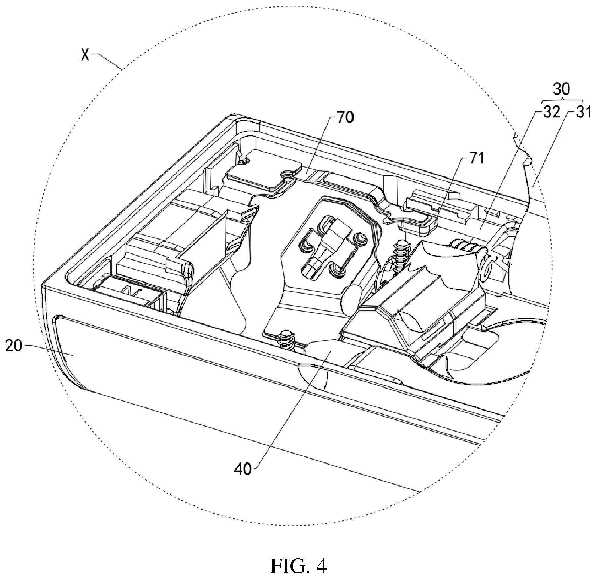

As shown in FIG. 2, FIG. 3, and FIG. 4, FIG. 2 is a diagram of a partial cross-sectional structure of the charging case 100 shown in FIG. 1 and cut along A-A, FIG. 3 is a diagram of an exploded structure of the charging case 100 shown in FIG. 1, and FIG. 4 is an enlarged view of a structure at X of the charging case 100 shown in FIG. 3.

The charging case 100 may further include an opening and closing mechanism 30 and a circuit board 40. The circuit board 40 is located in the lower housing 20. Currently, circuit components such as the circuit board 40 are all disposed in the lower housing 20. The circuit board 40 may be fastened to an inner wall of the lower housing 20, or may be fastened to a mechanical part in the lower housing 20. A position at which the circuit board 40 is fastened in the lower housing 20 is not limited in embodiments of this application. The opening and closing mechanism 30 connects the upper housing 10 to the lower housing 20, and enables the upper housing 10 to be opened or closed relative to the lower housing 20.

Refer to FIG. 2 to FIG. 4. The upper housing 10 may include a metal portion 14. It may be understood that, a part of a structure of the upper housing 10 may be made of a metal material or an entire structure of the upper housing 10 may be made of a metal material, and the part that is of the upper housing 10 and that is made of the metal material is the metal portion 14. The housing made of the metal material has high structural strength, and can well protect an internal structure of the charging case 100. In addition, the housing made of the metal material has good appearance texture. The metal portion 14 may be made of a material such as an aluminum alloy or stainless steel. The aluminum alloy has characteristics of low density and light weight, while the stainless steel material offers both wear resistance and a strong heat dissipation capability. The metal portion 14 is electrically connected to the opening and closing mechanism 30, and the opening and closing mechanism 30 is electrically connected to the circuit board 40, to ground the metal portion 14.

It may be understood that, when at least a part of the structure of the upper housing 10 is made of the metal material, electrostatic discharge from the metal causes a function failure of software or hardware of the charging case 100, affecting user experience. For example, the electrostatic discharge from the metal may cause a function failure of software of the charging case 100, requiring shutdown and restart, or may cause a function failure of hardware (for example, the circuit board) in the charging case 100, damaging the charging case 100. Therefore, the metal portion 14 of the upper housing 10 needs to be grounded, to enhance reliability of the charging case 100.

In embodiments of this application, the metal portion 14 is electrically connected to the opening and closing mechanism 30, and the opening and closing mechanism 30 is electrically connected to the circuit board 40 in the lower housing 20, to electrically connect the metal portion 14 to the circuit board 40 in the lower housing 20, so as to ground the metal portion 14 and avoid impact of electrostatic discharge from the metal portion 14 on performance of the charging case 100. In embodiments of this application, the opening and closing mechanism 30 of the charging case 100 and internal space of the charging case 100 are fully and properly used, to ground the metal portion 14. Grounding effect is good, and a grounding manner is simple.

Refer to FIG. 2 to FIG. 4. The opening and closing mechanism 30 may include a support 31 and a rotating shaft 32. The support 31 is fastened to the upper housing 10 and rotatably connected to the lower housing 20 through the rotating shaft 32. The support 31 is electrically connected to the metal portion 14, and electrically connected to the circuit board 40. For example, the metal portion 14 may be electrically connected to the support 31, the support 31 is electrically connected to the rotating shaft 32, and the rotating shaft 32 is electrically connected to the circuit board 40, to ground the metal portion 14. In other words, the support 31 may be electrically connected to the circuit board 40 through the rotating shaft 32. Alternatively, the metal portion 14 may be electrically connected to the support 31, the support 31 is electrically connected to the rotating shaft 32, the rotating shaft 32 is electrically connected to the lower housing 20, and the lower housing 20 is electrically connected to the circuit board 40, to ground the metal portion 14. Alternatively, the metal portion 14 is electrically connected to the support 31, and the support 31 is electrically connected to the circuit board 40, to ground the metal portion 14. Alternatively, the metal portion 14 is electrically connected to the support 31, the support 31 is electrically connected to the lower housing 20, and the lower housing 20 is electrically connected to the circuit board 40. In embodiments of this application, a grounding path is flexible, and may be designed based on space in the charging case 100.

In some possible embodiments, the rotating shaft 32 is fastened to the lower housing 20, the upper housing 10 is fastened to the support 31, the support 31 is rotatably connected to the rotating shaft 32, and the upper housing 10 may rotate relative to the rotating shaft 32, so that the upper housing 10 can be opened or closed relative to the lower housing 20. It may be understood that, the rotating shaft 32 may be fastened to the lower housing 20 through an adhesive (for example, a hot melt adhesive), a fastener, or another fastening structure, or the rotating shaft 32 may be welded to the lower housing 20.

It may be understood that, when the opening and closing mechanism 30 in embodiments of this application includes the support 31 and the rotating shaft 32, the rotating shaft 32 may be fastened to the inside of the lower housing 20, and the support 31 may also be disposed inside the accommodation cavity 310 enclosed by the upper housing 10 and the lower housing 20. When the charging case 100 is closed, the opening and closing mechanism 30 is not visible from the outside of the charging case 100. In other words, the opening and closing mechanism 30 may be disposed as a hidden structure. This helps enhance appearance beauty of the charging case 100, and can also reduce a gap between the upper housing 10 and the lower housing 20, to prevent external impurities or liquid from entering the charging case 100.

In another possible embodiment, the support 31 may be fastened to the lower housing 20, and rotatably connected to the upper housing 10 through the rotating shaft 32, to ground the metal portion 14. For example, the rotating shaft 32 is fastened to the upper housing 10, and the support 31 is rotatably connected to the rotating shaft 32.

Refer to FIG. 4. The charging case 100 may include an electrical connector 70. The electrical connector 70 may be a flexible circuit board. The flexible circuit board has good flexibility and electrical conductivity, and may be bent based on the structure and the internal space of the charging case 100 to avoid occupying excessive space of the charging case 100. The electrical connector 70 may alternatively be a spring plate, a pogo pin, or the like, and the spring plate or the pogo pin can also implement good and stable electrical connection.

In some embodiments, with reference to FIG. 4, the electrical connector 70 may electrically connect the rotating shaft 32 to the circuit board 40. The electrical connector 70 may be electrically connected to the rotating shaft 32 through a conductive adhesive 71, or the electrical connector 70 may be welded to the rotating shaft 32, to implement electrical connection. When the electrical connector 70 is a flexible circuit board, window opening is performed on the flexible circuit board to expose copper, to implement electrical connection to the rotating shaft 32. In this embodiment of this application, a grounding path of the metal portion 14 may be as follows: The metal portion 14, the support 31, the rotating shaft 32, the electrical connector 70, and the circuit board 40 are electrically connected in sequence, to ground the metal portion 14. The rotating shaft 32 may be made of a conductive metal material. When the electrical connector 70 is a flexible circuit board, the flexible circuit board is properly bent inside the charging case 100 based on flexibility of the flexible circuit board, so that the flexible circuit board electrically connects the rotating shaft 32 to the circuit board 40. A connection manner is simple, and a connection path may be adjusted according to a requirement. This helps enhance utilization of space of the charging case 100.

In some embodiments, the electrical connector 70 may electrically connect the lower housing 20 to the circuit board 40. At least a part of a structure of the lower housing 20 may be made of a conductive metal material. In this embodiment of this application, a grounding path of the metal portion 14 may be as follows: The metal portion 14, the support 31, the rotating shaft 32, the lower housing 20, the electrical connector 70, and the circuit board 40 are electrically connected in sequence, to ground the metal portion 14. When the rotating shaft 32 is electrically connected to the lower housing 20, the electrical connector 70 may electrically connect the lower housing 20 to the circuit board 40, to ground the metal portion 14. The rotating shaft 32 may be electrically connected to the lower housing 20 through a conductive adhesive, welding, or the like.

In some embodiments, the electrical connector 70 may electrically connect the support 31 to the circuit board 40. In this embodiment of this application, a grounding path of the metal portion 14 may be as follows: The metal portion 14, the support 31, the electrical connector 70, and the circuit board 40 are electrically connected in sequence, to ground the metal portion 14. At least a part of a structure of the support 31 may be made of a conductive metal material, and a charge released to the support 31 may be conducted to the circuit board 40 through the electrical connector 70 instead of passing through the rotating shaft 32. This reduces conductive structures required in a process of grounding the metal portion 14, and enhances grounding reliability.

In some embodiments, the electrical connector 70 may electrically connect the lower housing 20 to the circuit board 40. In this embodiment of this application, a grounding path of the metal portion 14 may be as follows: The metal portion 14, the support 31, the lower housing 20, the electrical connector 70, and the circuit board 40 are electrically connected in sequence, to ground the metal portion 14. Refer to FIG. 2. The charging case 100 may include a conductive contact member 80, and the conductive contact member 80 is fastened to a part that is of the support 31 and that is located in the lower housing 20. When the upper housing 10 is closed relative to the lower housing 20, the support 31 rotates around the rotating shaft 32, and the conductive contact member 80 comes into contact with the lower housing 20 and electrically connects the support 31 to the lower housing 20. When the upper housing 10 is opened relative to the lower housing 20, the support 31 rotates around the rotating shaft 32, and the conductive contact member 80 is separated from the lower housing 20. The conductive contact member 80 may be conductive foam or the like. The conductive contact member 80 is fastened to the support 31, so that when the upper housing 10 is closed relative to the lower housing 20, the support 31 can be electrically connected to the lower housing 20 through the conductive contact member 80. This can increase an electrical connection path between the metal portion 14 and the circuit board 40 when the upper housing 10 is closed relative to the lower housing 20, and enhance reliability of grounding between the metal portion 14 and the circuit board 40. A quantity of conductive contact members 80 may be one, two, three, or the like. The quantity and disposing positions of conductive contact members 80 are not limited in embodiments of this application.

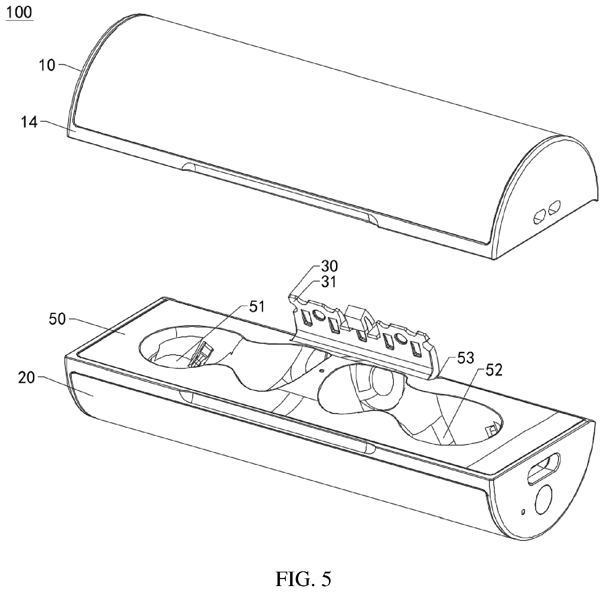

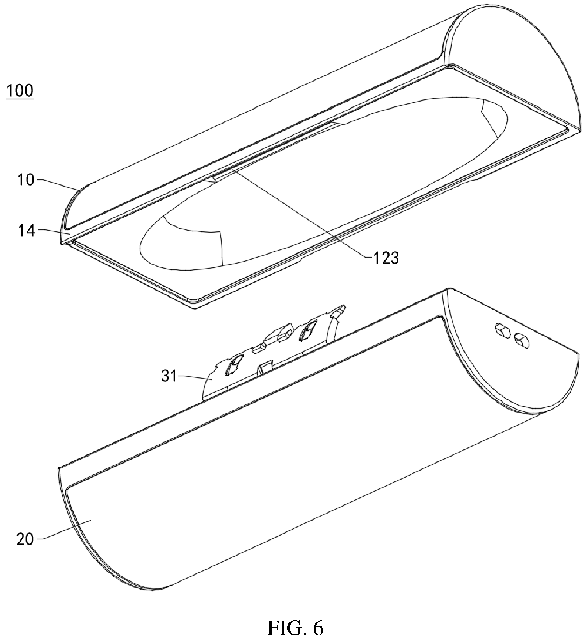

As shown in FIG. 3, FIG. 5, and FIG. 6, FIG. 5 is a diagram of another exploded structure of the charging case 100 shown in FIG. 1, and FIG. 6 is a diagram of a structure of the charging case 100 shown in FIG. 5 from another angle. The charging case 100 may include a bracket 50. After components such as the battery and the circuit board 40, and the opening and closing mechanism 30 are mounted in the lower housing 20, the bracket 50 may be fastened to the lower housing 20. The bracket 50 may include a first accommodation groove 51, a second accommodation groove 52, and an indentation 53. The first accommodation groove 51 and the second accommodation groove 52 may be configured to accommodate earphones 200. A shape of the first accommodation groove 51 may be the same as or different from a shape of the second accommodation groove 52. The shapes of the first accommodation groove 51 and the second accommodation groove 52 may be specifically designed based on shapes of the earphones 200.

In some embodiments, the indentation 53 and the lower housing 20 may form space for the support 31 of the opening and closing mechanism 30 to extend, and the rotating shaft 32 is located below the bracket 50. The upper housing 10 is provided with a gap 123, the support 31 extends into the gap 123 and is fastened to the upper housing 10, and the support 31 is electrically connected to the metal portion 14. The bracket 50 may be disposed to separate the earphones 200 from a component in the charging case 100, and is configured to support the earphones 200. The bracket 50 may be an integrally formed structure, or may be formed by assembling split structures.

An assembly sequence of the charging case 100 in embodiments of this application may be mounting component such as the battery and the circuit board in the lower housing 20, passing the rotating shaft 32 through a through hole 313 of the support 31 and fastening the rotating shaft 32 to an inner wall of the lower housing 20, fastening the bracket 50 to the lower housing 20, and connecting the upper housing 10 to the opening and closing mechanism 30. Alternatively, another assembly sequence may be used for the charging case 100 according to a requirement such as a process. This is not limited in embodiments of this application.

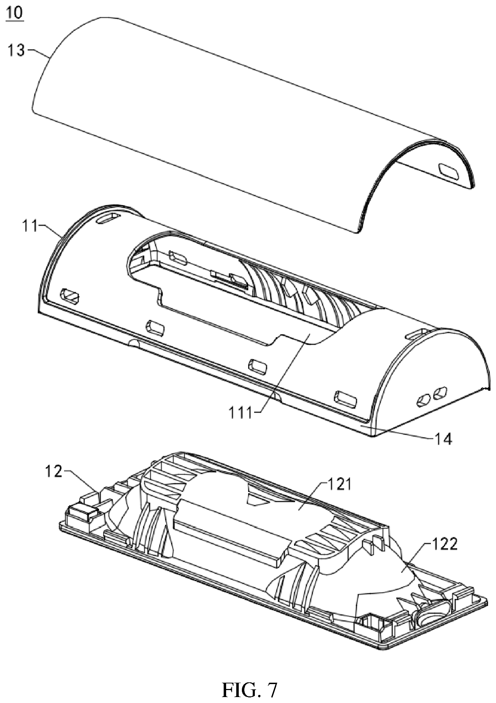

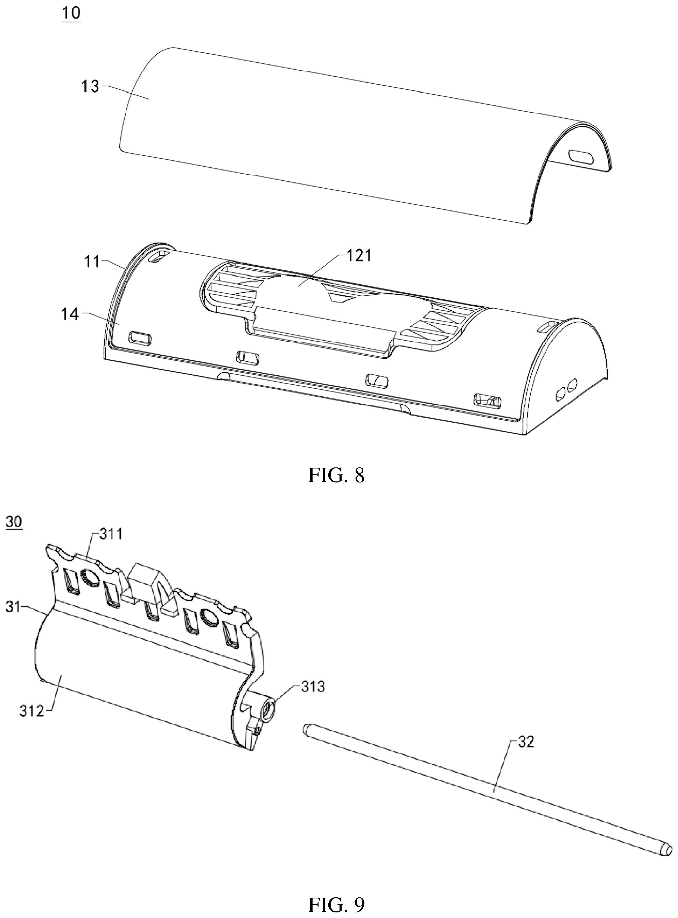

With reference to FIG. 2, FIG. 7, and FIG. 8, FIG. 7 is a diagram of an exploded structure of the upper housing 10, and FIG. 8 is a diagram of another exploded structure of the upper housing 10. In embodiments of this application, an example in which the upper housing 10 is of a multi-layer structure is used for description. The upper housing 10 may include a first housing portion 11, a second housing portion 12, and a third housing portion 13. The first housing portion 11 includes the metal portion 14, the first housing portion 11 is a basic frame of the upper housing 10, and the first housing portion 11 is made of a metal material, so that strength of the upper housing 10 can be enhanced. An opening 111 is provided at the top of the first housing portion 11.

At least a part of a structure of the second housing portion 12 is located on a side that is of the first housing portion 11 and that faces the lower housing 20. For example, the second housing portion 12 includes a first part 121 and a second part 122. The first part 121 is embedded in the opening 111, the second part 122 is located on the side that is of the first housing portion 11 and that faces the lower housing 20, the gap 123 is formed between the second part 122 and the first housing portion 11, and the support 31 extends into the gap 123 and is fastened to the upper housing 10. A material of the second housing portion 12 may be nonmetal such as plastic.

When the first housing portion 11 is made of a metal material, metal shields an antenna signal of the earphone 200. The opening 111 is provided at the top of the first housing portion 11, and the second housing portion 12 made of the nonmetal material is embedded in the opening 111, to help prevent metal from shielding the antenna signal of the earphone 200 when the earphone 200 is in the charging case 100, and ensure structural strength of the upper housing 10.

The third housing portion 13 covers and is fastened to the first housing portion 11 and the second housing portion 12, to form a partial appearance surface of the charging case 100. The third housing portion 13 may be of an arc-shaped structure, to enhance appearance beauty of the charging case 100, and improve a sense of touch of the user during operation. The third housing portion 13 may be of a single-layer structure, or the third housing portion 13 may be of a multi-layer structure. Multi-layer may be understood as two or more layers. A layer structure, used as an appearance surface, on the outermost side of the third housing portion 13 may be made of a polyurethane synthetic leather material. The polyurethane synthetic leather is a soft material having texture and appearance of leather. The polyurethane synthetic leather can provide features such as water resistance, durability, and softness. The housing made of the polyurethane synthetic leather provides a comfortable sense of touch and has a light body, and appearance of the housing is more delicate and beautiful due to exquisite workmanship. A specific structure and material of the third housing portion 13 are not limited in embodiments of this application.

It may be understood that, the upper housing 10 in embodiments of this application is merely an example, and the upper housing 10 may be of another structure. A specific structure and material of the upper housing 10 are not limited in embodiments of this application, and may be designed according to a requirement.

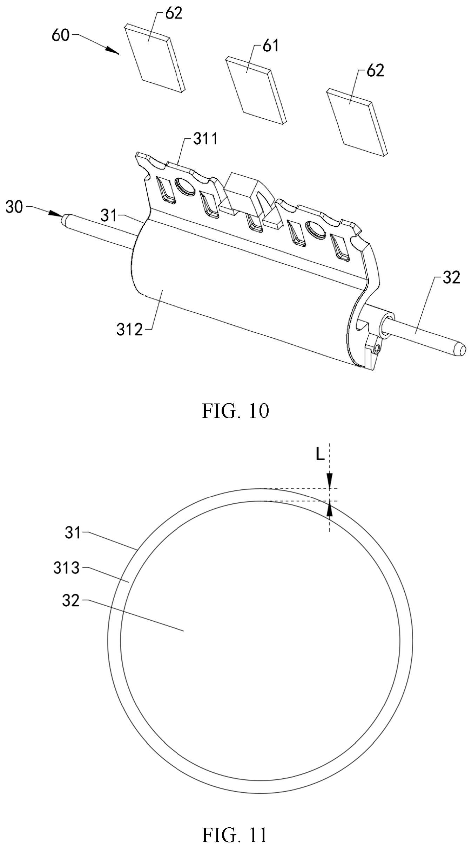

Refer to FIG. 2, FIG. 9, and FIG. 10. FIG. 9 is a diagram of an exploded structure of the opening and closing mechanism 30. FIG. 10 is a diagram of structures of the opening and closing mechanism 30 and a connector 60. The support 31 of the opening and closing mechanism 30 includes a fastened end 311 and a rotatable end 312. The fastened end 311 is embedded in the gap 123 of the upper housing 10, the fastened end 311 is fastened to the first housing portion 11, and the fastened end 311 is fastened to the second housing portion 12. The rotatable end 312 is provided with a through hole 313. The rotating shaft 32 passes through the through hole 313, and the rotating shaft 32 is rotatably connected to the support 31.

Refer to FIG. 2 and FIG. 10. The charging case 100 may include a connector 60, and the connector 60 may include a conductive member 61. The conductive member 61 electrically connects the support 31 to the metal portion 14. The support 31 may be electrically connected to the metal portion 14 through the conductive member 61, and a connection manner is simple. The conductive member 61 is sandwiched between the support 31 and the metal portion 14, and is highly stable and not likely to detach. The conductive member 61 may be a structure having connection strength, for example, a conductive adhesive. When electrically connecting the metal portion 14 to the support 31, the conductive member 61 can further fasten the metal portion 14 to the support 31, to enhance structural stability of the charging case 100. The conductive member 61 may alternatively be conductive fabric, conductive silver paste, conductive foam, or the like.

In some embodiments, there are at least two conductive members 61, and the at least two conductive members 61 are spaced from each other. For example, there may be one, two, or three conductive members 61. When there are at least two conductive members 61, reliability of electrical connection can be enhanced. Positions of the at least two conductive members 61 may be set according to a requirement. This is not limited in embodiments of this application.

The connector 60 may further include an adhesive member 62, and the adhesive member 62 fastens the support 31 to the upper housing 10. Connection strength of the adhesive member 62 is higher than connection strength of the conductive member 61. The adhesive member 62 has high connection strength, so that disposing the adhesive member 62 can enhance strength of connection between the support 31 and the upper housing 10, to enhance structural stability of the charging case 100. The adhesive member 62 may be a two-component adhesive, and the two-component adhesive has very high bonding strength. The adhesive member 62 may alternatively be another material having high connection strength. This is not limited in embodiments of this application.

In some embodiments, there are at least two adhesive members 62, the at least two adhesive members 62 are spaced from each other correspondingly on an edge of the support 31, and the conductive member 61 is located between two adjacent adhesive members 62. For example, there may be one, two, or three adhesive members 62. Connection strength of the adhesive member 62 is high, and the adhesive member 62 is located on the edge of the support 31, so that overall structural strength of the support 31 and the upper housing 10 can be enhanced. It may be understood that, when the adhesive member 62 is not disposed at an edge position but disposed at a middle position, the edge position is likely to crack, which is likely to affect connection strength at the middle position. For example, there may be one conductive member 61 and two adhesive members 62, and the conductive member 61 is located between the two adhesive members 62. In another embodiment, there may be two conductive members 61 and two adhesive members 62, and both the two conductive members 61 are located between the two adhesive members 62.

It may be understood that, positions at which the conductive member 61 and the adhesive member 62 are disposed are not limited in embodiments of this application. In another embodiment, the conductive member 61 may not be disposed at a middle position, the adhesive member 62 may not be disposed at an edge position, the conductive member 61 may not be disposed between adhesive members 62, and the conductive member 61 and the adhesive member 62 may be flexibly disposed according to a requirement.

It may be understood that, shapes of the conductive member 61 and the adhesive member 62 shown in FIG. 10 are merely examples, the conductive member 61 and the adhesive member 62 may alternatively be in another shape such as a circle or a triangle, and the conductive member 61 and the adhesive member 62 may be in a same shape or different shapes.

In some embodiments, when strength of connection between the support 31 and the upper housing 10 is high, the charging case 100 may not be provided with the adhesive member 62.

In another implementation, the support 31 may alternatively be welded to the metal portion 14, welding provides high structural strength, and welding can implement electrical connection and fastening between the support 31 and the metal portion 14. Manners of electrically connecting and fastening the support 31 to the metal portion 14 are not limited in embodiments of this application, and may be set according to a requirement.

In embodiments of this application, the existing opening and closing mechanism 30 of the charging case 100 is used to implement electrical connection between the metal portion 14 and the circuit board 40, the conductive member 61 for electrical connection is disposed in the gap 123 of the upper housing 10, and the electrical connector 70 is flexibly disposed in unoccupied space of the lower housing 20 based on flexibility of the electrical connector, with no need to additionally increase a size of the charging case 100. This helps the charging case 100 have good performance, and facilitates miniaturization of the charging case 100.

FIG. 11 is a diagram of a partial structure of the opening and closing mechanism 30. A spacing L between a hole wall of the through hole 313 of the support 31 and the rotating shaft 32 is less than or equal to 0.05 mm. The rotating shaft 32 passes through the through hole 313, to be rotatably connected and electrically connected to the support 31. When the spacing between the hole wall of the through hole 313 and the rotating shaft 32 is excessively large, it is difficult to electrically connect the support 31 to the rotating shaft 32. The spacing between the hole wall of the through hole 313 and the rotating shaft 32 is set to be less than or equal to 0.05 mm. This facilitates electrical connection between the support 31 and the rotating shaft 32.

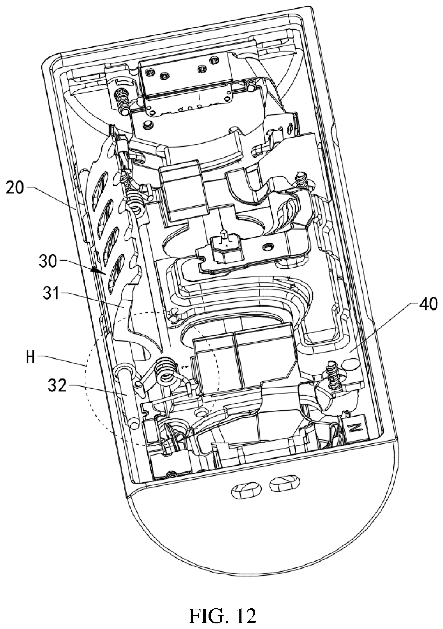

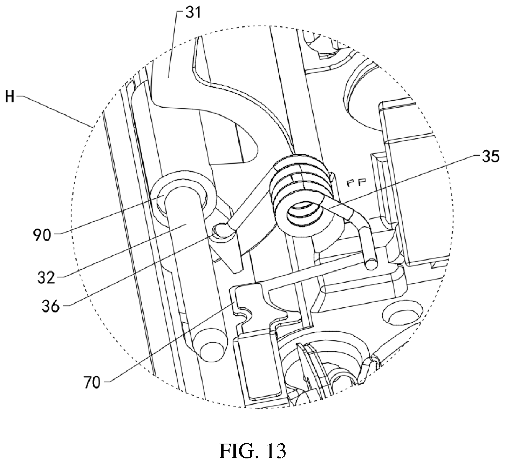

Refer to FIG. 9, FIG. 12, and FIG. 13. FIG. 12 is a diagram of a partial structure of the charging case 100 shown in FIG. 2. FIG. 13 is an enlarged view of a structure at H of the charging case 100 shown in FIG. 12. In some embodiments, an electrical connection component 90 may be disposed between the hole wall of the through hole 313 of the support 31 of the opening and closing mechanism 30 and the rotating shaft 32, to implement good electrical connection between the support 31 and the rotating shaft 32. Optionally, the electrical connection component 90 between the hole wall of the through hole 313 and the rotating shaft 32 may include a conductive silicone ring. Because the conductive silicone ring is elastic, a step gap between the support 31 and the rotating shaft 32 can be dynamically adjusted, without affecting rotation between the support 31 and the rotating shaft 32. In addition, electrical connection between the support 31 and the rotating shaft 32 can be implemented based on electrical conductivity of the silicone ring, to enhance reliability of electrical connection between the support 31 and the rotating shaft 32. In some other embodiments, the electrical connection component 90 may alternatively include conductive foam, conductive fabric, or the like.

Refer to FIG. 13. In some other embodiments, the opening and closing mechanism 30 may further include a torsion spring 35, and the torsion spring 35 may be configured to increase resistance in a process of opening or closing the charging case, to enhance a sense of touch of the user when the user opens or closes the charging case. The upper housing 10 may be grounded through the torsion spring 35 of the opening and closing mechanism 30. In some embodiments, one side of the torsion spring 35 is in contact with the support 31 to implement electrical connection. Optionally, the torsion spring 35 may be electrically connected to the support 31 through a conductive silicone ring. Optionally, the torsion spring 35 may alternatively be electrically connected to the support 31 through conductive foam or conductive fabric. For example, the support 31 may be provided with a mounting hole 36. The side of the torsion spring 35 is located in the mounting hole 36 to implement contact and electrical connection between the torsion spring 35 and the mounting hole 36. Alternatively, a conductive silicone ring, conductive foam, conductive fabric, or the like is disposed between a hole wall of the mounting hole 36 and the side of the torsion spring 35. The other side of the torsion spring 35 may be electrically connected to the electrical connector 70, and the electrical connector 70 is electrically connected to the circuit board 40. Alternatively, the other side of the torsion spring 35 may be electrically connected to the lower housing 20, the lower housing 20 is electrically connected to the electrical connector 70, and the electrical connector 70 is electrically connected to the circuit board 40. In this way, the upper housing 10 can be grounded through the support 31 and a path in which the torsion spring 35 is electrically connected to the electrical connector 70 in the lower housing 20.

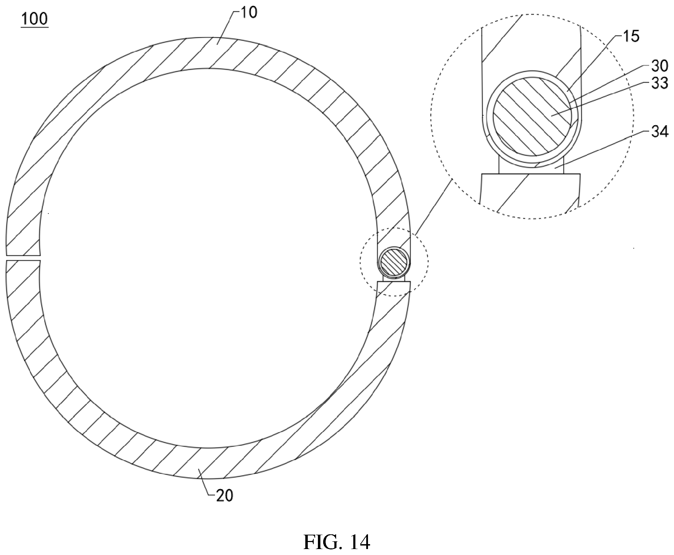

FIG. 14 is a diagram of a structure of another charging case 100. In some possible embodiments, an opening and closing mechanism 30 may include a rotating shaft 33, and the opening and closing mechanism 30 may not be provided with a support, to facilitate miniaturization and lightweight of the charging case 100. The rotating shaft 33 in FIG. 14 is referred to as a first rotating shaft 33, to be distinguished from the rotating shaft 32 in the opening and closing mechanism 30 provided with the support 31. It may be understood that, for disposing of a layer structure and a metal portion 14 of an upper housing 10 and disposing of a structure of a lower housing 20, a circuit board 40, and an electrical connector 70 of the charging case 100 shown in FIG. 14, refer to the foregoing embodiments. Details are not described herein again.

The first rotating shaft 33 may be fastened to the lower housing 20 through an adhesive structure 34, or the first rotating shaft 33 may be fastened to the lower housing 20 through a fastener or another fastening structure, or the first rotating shaft 33 may be welded to the lower housing 20.

The upper housing 10 is rotatably connected to the first rotating shaft 33, and the upper housing 10 can rotate relative to the first rotating shaft 33, so that the upper housing 10 can be opened or closed relative to the lower housing 20. For example, a connection hole 15 is provided on a side that is of the upper housing 10 and that is connected to the first rotating shaft 33, and the first rotating shaft 33 passes through the connection hole 15 on the upper housing 10. When the charging case 100 is closed, the rotating shaft 32 is visible from the outside. In other words, the opening and closing mechanism 30 is exposed. The metal portion of the upper housing 10 is electrically connected to the first rotating shaft 33.

When the opening and closing mechanism 30 includes the first rotating shaft 33, and the opening and closing mechanism 30 may not be provided with the support 31, a grounding path of the metal portion of the upper housing 10 may be as follows: The metal portion of the upper housing 10, the first rotating shaft 33, the electrical connector, and the circuit board are electrically connected in sequence, or the metal portion of the upper housing 10, the first rotating shaft 33, the lower housing 20, the electrical connector, and the circuit board are electrically connected in sequence. The first rotating shaft 33 may be electrically connected to the lower housing 20 through a conductive adhesive, welding, or the like. This is not limited in embodiments of this application.

Refer to FIG. 14. When the opening and closing mechanism 30 includes the first rotating shaft 33, and the opening and closing mechanism 30 is not provided with the support 31, a spacing between a hole wall of the connection hole 15 and the first rotating shaft 33 is less than or equal to 0.05 mm. This facilitates electrical connection between the metal portion 14 of the upper housing 10 and the first rotating shaft 33, to ground the metal portion 14.

In another possible embodiment, the first rotating shaft 33 may be fastened to the upper housing 10, the lower housing 20 is provided with a connection hole 15, the first rotating shaft 33 passes through the connection hole 15, and the metal portion 14 is electrically connected to the rotating shaft 33.

It may be understood that, the opening and closing mechanism 30 in embodiments of this application is merely an example, and the opening and closing mechanism 30 may alternatively be of another structure. For example, the opening and closing mechanism 30 may be a sliding mechanism, so that the upper housing 10 can be opened or closed relative to the lower housing 20 through sliding. A specific structure of the opening and closing mechanism 30 is not limited in embodiments of this application.

In embodiments of this application, the opening and closing mechanism 30 is used to electrically connect the metal portion 14 of the upper housing 10 to the circuit board 40 in the lower housing 20, to ground the metal portion 14, so as to avoid impact of the electrostatic discharge from the metal portion 14 on performance of the charging case 100. A grounding manner in embodiments of this application is simple, and the internal structure of the charging case 100 and the internal space of the charging case 100 are fully and properly used, to ground the metal portion 14. In embodiments of this application, there are a plurality of grounding paths, which may be set based on an internal spatial structure of the charging case 100.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging case (100), comprising an upper housing (10), a lower housing (20), an opening and closing mechanism (30), and a circuit board (40), wherein
the opening and closing mechanism (30) connects the upper housing (10) to the lower housing (20), and enables the upper housing (10) to be opened or closed relative to the lower housing (20), the upper housing (10) and the lower housing (20) jointly enclose an accommodation cavity (310), and the accommodation cavity (310) is configured to accommodate an earphone (200);
the upper housing (10) comprises a metal portion (14), and the circuit board (40) is located in the lower housing (20); and
the metal portion (14) is electrically connected to the opening and closing mechanism (30), and the opening and closing mechanism (30) is electrically connected to the circuit board (40), to ground the metal portion (14).

2. The charging case (100) according to claim 1, wherein the opening and closing mechanism (30) comprises a support (31) and a rotating shaft (32), the support (31) is fastened to the upper housing (10) and rotatably connected to the lower housing (20) through the rotating shaft (32), and the support (31) is electrically connected to the metal portion (14) and electrically connected to the circuit board (40).

3. The charging case (100) according to claim 2, wherein the rotating shaft (32) is fastened to the lower housing (20), the support (31) is rotatably connected to the rotating shaft (32), and the support (31) is electrically connected to the circuit board (40) through the rotating shaft (32).

4. The charging case (100) according to claim 3, wherein the support (31) comprises a through hole (313), the rotating shaft (32) passes through the through hole (313), and a spacing between a hole wall of the through hole (313) and the rotating shaft (32) is less than or equal to 0.05 mm.

5. The charging case (100) according to claim 2, wherein the charging case (100) comprises a conductive member (61), and the conductive member (61) electrically connects the support (31) to the metal portion (14).

6. The charging case (100) according to claim 5, wherein there are at least two conductive members (61), and the at least two conductive members (61) are spaced from each other.

7. The charging case (100) according to claim 5, wherein the charging case (100) comprises an adhesive member (62), the adhesive member (62) fastens the support (31) to the upper housing (10), and connection strength of the adhesive member (62) is higher than connection strength of the conductive member (61).

8. The charging case (100) according to claim 7, wherein there are at least two adhesive members (62), the at least two adhesive members (62) are spaced from each other on an edge of the support (31), and the conductive member (61) is located between two adjacent adhesive members (62).

9. The charging case (100) according to claim 2, wherein the charging case (100) comprises an electrical connector (70), and the electrical connector (70) electrically connects the support (31) to the circuit board (40).

10. The charging case (100) according to claim 1, wherein the opening and closing mechanism (30) comprises a rotating shaft (33); and the rotating shaft (33) is fastened to the lower housing (20), the upper housing (10) is provided with a connection hole (15), the rotating shaft (33) passes through the connection hole (15), and the metal portion (14) is electrically connected to the rotating shaft (33); or the rotating shaft (33) is fastened to the upper housing (10), the lower housing (20) is provided with a connection hole (15), the rotating shaft (33) passes through the connection hole (15), and the metal portion (14) is electrically connected to the rotating shaft (33).

11. The charging case (100) according to claim 2 or 10, wherein the charging case (100) comprises an electrical connector (70), and the electrical connector (70) electrically connects the rotating shaft (32) to the circuit board (40), or the electrical connector (70) electrically connects the lower housing (20) to the circuit board (40).

12. The charging case (100) according to claim 11, wherein the electrical connector (70) is a flexible circuit board, a spring plate, or a pogo pin.

13. The charging case (100) according to claim 2, wherein the lower housing (20) is electrically connected to the circuit board (40); and
the charging case (100) comprises a conductive contact member (80), and the conductive contact member (80) is fastened to a part that is of the support (31) and that is located in the lower housing (20); when the upper housing (10) is closed relative to the lower housing (20), the conductive contact member (80) comes into contact with the lower housing (20) and electrically connects the support (31) to the lower housing (20); and when the upper housing (10) is opened relative to the lower housing (20), the conductive contact member (80) is separated from the lower housing (20).

14. An earphone assembly (300), comprising an earphone (200) and the charging case (100) according to any one of claims 1 to 13, wherein the earphone (200) is located in the accommodation cavity (310) of the charging case (100), and the charging case (100) is configured to store and charge the earphone (200).
